# EUROPÄISCHE PATENTSCHRIFT

(11) **EP 0 551 606 B1**
(45) Veröffentlichungstag und Bekanntmachung des Hinweises auf die Patenterteilung: **11.09.1996**
(21) Anmeldenummer: 92120632.2
(22) Anmeldetag: 03.12.1992
(51) Int. Cl.: G01V 3/10

(54) **Metallsuchdetektor**
Metal detector
Détecteur de métaux

(30) Priorität: 11.01.1992 DE 4200518
(43) Veröffentlichungstag der Anmeldung: 21.07.1993
(73) Patentinhaber: ROBERT BOSCH GMBH, 70442 Stuttgart (DE)
(72) Erfinder: Robertson, Paul Andrew, Duxford, Cambridge (GB)

(56) Entgegenhaltungen:
- EP-A- 0 279 731
- EP-A- 0 305 013
- EP-A- 0 366 221
- WO-A-89/07775
- DE-A- 3 235 535
- GB-A- 1 510 034

## Beschreibung

Die Erfindung geht aus von einem Metallsuchdetektor zum Aufspüren von verborgenem Metall oder elektrischen Leitungen nach der Gattung des Hauptanspruchs. Aus der EP 366 221 A2 ist schon ein Metallsuchdetektor bekannt. Bei dem Sensor des Metallsuchdetektors werden die kreuzweise angeordneten Spulenpaare mittels eines Umschalters alternierend mit einer vorgegebenen Frequenz erregt. Es wurde auch vorgeschlagen, die Sensorspulen rotieren zu lassen, um das verborgene Metall möglichst flächendeckend aufzuspüren. Beide Verfahren benötigen für die Auswertung der empfangenen Meßsignale relativ viel Zeit, so daß beispielsweise beim Überstreichen einer größeren Wandfläche mit relativ schnellen Bewegungen das verborgene Metall unter Umständen nicht gefunden wird. Auch hat sich herausgestellt, daß die rotierenden Sensorspulen mechanisch empfindlich und daher für den harten Einsatz auf Baustellen oder dgl. weniger geeignet sind. Zudem kann die Mechanik leicht beschädigt werden, wenn das Gerät einen Schlag erhält oder von einer größeren Höhe auf den Boden fällt.

Es sind auch Metallsuchdetektoren bekannt, die nach dem Prinzip eines Sperrschwingers arbeiten und bei denen die Schwingfrequenz beim Auftreten von Metallen mehr oder weniger verändert wird. Da die Veränderung der Schwingfrequenz sehr stark vom Abstand des Metalls zu der Sensorspule ahbängt, ist ein Empfindlichkeitsregler vorgesehen, mit dem manuell die Empfindlichkeit der Sensorspule so eingestellt wird, bis eine Anzeige, beispielsweise eine Leuchtdiode, gerade noch ausgeschaltet ist, wenn kein Metall in der Nähe ist und dann einschaltet, sobald das Metall auftaucht. Diese Einrichtung arbeitet relativ ungenau, da das Magnetfeld des Sperrschwingers relativ weit streut und dadurch eine genaue Ortung kaum möglich ist. In vielen Fällen gestaltet sich das manuelle Einstellen der Empfindlichkeit als recht schwierig. Bei den bekannten Metallsuchgeräten kann nicht die Tiefe des verborgenen Metalls erfaßt werden.

Es ist weiter bekannt, elektrische Leitungen mittels einer Antenne zu orten. Dabei erzeugt das elektrische Feld des Stromleiters in der Antenne eine Spannung, die entsprechend auswertbar ist. Allerdings ist nur die ungefähre Lage der elektrischen Leitung feststellbar, nicht ihre genaue Position in einer Mauer oder Wand, da das elektrische Feld des elektrischen Leiters sehr weit streut.

Aus der EP 0 305 013 A2 ist ein induktiver Näherungssensor bekannt, bei dem eine Meßspule mit einer ersten Frequenz und einer Referenzspule mit einer zweiten Frequenz erregt werden. Aus der Differenz der beiden Frequenzen wird eine Spannungsdifferenz gebildet und diese mit dem Amplitudendifferenzsignal der beiden Spulen verglichen. Die Differenz dieser Signale ist ein Maß für die Tiefe des verborgenen Metalls.

Beim Metallsuchgerät der WO 89/07775 wird eine Doppelspule verwendet, um wahlweise zwei variable Magnetfelder zu erzeugen. Durch die unterschiedlichen Magnetfelder läßt sich eine zusätzliche Information gewinnen, aus der nicht nur die Tiefe, sondern auch der Durchmesser des verborgenen Metalls berechnet werden kann.

Aus der EP 0 279 731 A1 ist ein Metallsuchgerät bekannt, bei dem durch Regelung des Detektionsabstandes die Tiefe einer in einer Betonwand verborgenen Armierung ermittelt werden kann.

### Vorteile der Erfindung

Der erfindungsgemäße Metallsuchdetektor zum Aufspüren von in einem nicht metallischen Körper verborgenen Metall mit den kennzeichnenden Merkmalen des Hauptanspruchs hat demgegenüber den Vorteil, daß die genaue Lage, Richtung und Tiefe des verborgenen Metalls festgestellt werden kann. Besonders vorteilhaft ist, daß durch die Wichtung des empfangenen Signals die Empfindlichkeit des Gerätes automatisch eingestellt wird und dadurch die Lagebestimmung des verborgenen Metalls besonders präzise ist.

Durch die in den abhängigen Ansprüchen aufgeführten Maßnahmen sind vorteilhafte Weiterbildungen und Verbesserungen des im Hauptanspruch angegebenen Metallsuchdetektors möglich. Die Lagerichtung des verborgenen Metalls wird besonders dadurch auf einfache Weise festgestellt, daß die Amplitude des kleineren Signals durch die Wichtung verringert wird. Das hat zur Folge, daß das Detektionssignal des Sensors sehr steil abfällt, wenn der Sensor sich seitlich vom verborgenen Metall wegbewegt. Andererseits steigt das Sensorsignal sehr stark an, wenn sich der Sensor in Richtung auf das Metall zubewegt. Insgesamt ergibt sich durch die Wichtung der empfangenen Signale eine sehr genaue Lagebestimmung für das verborgene Metall.

Weiterhin ist vorteilhaft, daß die Auswerteschaltung mit nur wenigen handelsüblichen Bauteilen kostengünstig herstellbar ist.

Vorteilhaft ist auch die ringförmige Anordnung des Leitungsdetektors um das Zentrum des Sensors. Dadurch ist eine präzise Ortung eines spannungsführenden Leiters möglich.

Als besonderer Vorteil wird angesehen, daß der Metallsuchdetektor auch zur Bestimmung der Tiefe des verborgenen Metalls herangezogen werden kann. Dadurch wird beispielsweise bei einem Stahlgitter in einer Betonwand nicht nur die Lage des Stahlgitters bestimmt. Durch die Tiefenangabe ist es nunmehr möglich, nicht nur neben dem Stahlgitter zu bohren, sondern auch direkt bis zum Stahlgitter heran. Durch die angegebene Tiefe kann dabei der Bohrvorgang rechtzeitig abgebrochen werden, ohne daß der Bohrer das Stahlgitter berührt.

Um eine genaue Tiefenbestimmung durchführen zu können, ist es vorteilhaft, daß in einem Speicher in Form einer Tabelle entsprechende Korrekturfaktoren gespeichert sind. Aufgrund der Meßwerte kann dann der Mikrocomputer das Meßergebnis mit einem Korrekturfaktor beaufschlagen. Die Tiefenbestimmung wird dadurch sehr viel genauer, da aufwendige Eichvorgänge entfallen.

Weiterhin ist vorteilhaft, daß der Metallsuchdetektor ein Gehäuse mit einem seitlich abgewinkelten Handgriff aufweist, so daß er mit der Hand leicht über die abzusuchenden Flächen geführt werden kann.

Zum genauen Auffinden des verborgenen Metalls und Markierung der Fundstelle ist es vorteilhaft, daß im Wirkzentrum des Sensors eine Bohrung im Gehäuse angebracht worden ist, durch die beispielsweise der Bohrer einer Bohrmaschine geführt werden kann oder durch die Markierungen durchgeführt werden können. Auch ist es günstig, an dieser Stelle eine Hebevorrichtung zur definierten Veränderung des Meßabstandes des Metalldetektors anzuordnen, um die Tiefenmessung durchzuführen.

Zur Anzeige eines georteten Metalls eignet sich besonders günstig eine Flüssigkristallanzeige, die zumindest quantitativ ein dem Sensorsignal entsprechendes Balkendiagramm anzeigt. Zusätzliche Anzeigen für das Vorhandensein oder Fehlen eines Metalls sind auch durch einfache farbige Leuchtdioden oder durch ein akustisches Signal ausgebbar.

Weitere Verbesserungen und Vorteile der Erfindung sind der Beschreibung entnehmbar.

### Zeichnung

Ein Ausführungsbeispiel der Erfindung ist in der Zeichnung dargestellt und in der Beschreibung näher erläutert. Es zeigen Figur 1 ein Blockschaltbild, Figur 2a, 2b zwei Flußdiagramme für den Suchablauf, Figur 3a, 3b zeigt eine Displaydarstellung, Figur 4 zeigt einen Teil des Gehäuses des Metalldetektors mit der Hebevorrichtung und Figuren 5a bis 5c zeigen das Gehäuse des Metalldetektors in Auf- und Seitenansicht.

### Beschreibung des Ausführungsbeispiels

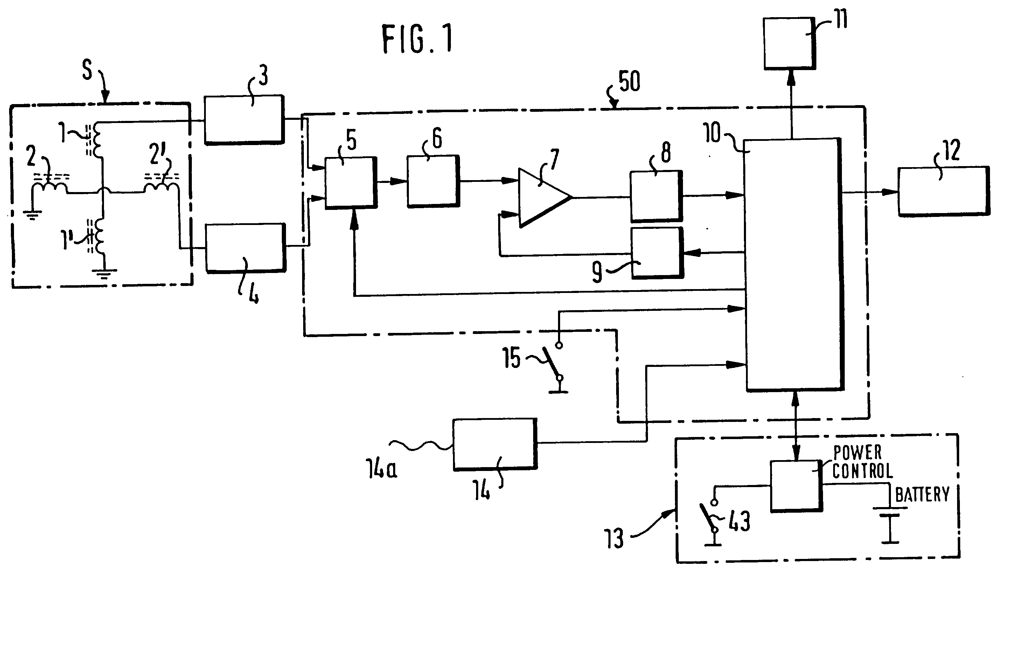

Gemäß Figur 1 weist ein Sensor S zwei kreuzweise angeordnete Spulenpaare 1-1' und 2-2' auf, die einen Winkel von 90° miteinander bilden. Die Spulenpaare sind auf entsprechenden Ferritstäben gewickelt, die an ihrem einen Ende über ein kreis- oder rechteckförmiges Joch miteinander verbunden sind und mit ihrem zweiten Ende offen sind und zur Meßfläche weisen. Ein derartiger Sensor ist beispielsweise in der EP 0 366 221 beschrieben. Jedes Spulenpaar 1-1' bzw. 2-2' ist mit einem Ende jeweils mit einem Oszillator 3 bzw. 4 verbunden und mit dem zweiten Ende auf eine gemeinsame Masse gelegt. Die Oszillatoren 3, 4 schwingen mit unterschiedlichen Frequenzen, typisch 60 KHz und 80 KHz, so daß unterschiedliche Magnetfelder in den Spulenpaaren 1-1' bzw. 2-2' entstehen, die sich in um 90° gedrehte Richtungen in Richtung des zu suchenden Metalls ausbreiten. Bei fehlendem Metall schwingen die Oszillatoren mit einer bestimmten Amplitude, die durch die Schaltungsanordnung vorgegeben und kalibriert ist. Wird ein Metall gefunden, dann wird die Schwingung aufgrund des elektromagnetischen Einflusses des Metalls gedämpft. Diese Dämpfung, die sich als Reduktion der Amplitude auswirkt, wird in einem Demodulator 1 des Oszillators 3 bzw. Demodulator 2 des Oszillators 4 gemessen. Der Aufbau eines Oszillators und eines Demodulators ist per se bekannt, so daß eine nähere Beschreibung nicht erforderlich ist.

Die Ausgänge der Oszillatoren sind mit einer Auswerteschaltung 50 verbunden, die als Eingangsstufe einen Multiplexer 5 aufweist, mit dem die Ausgänge der Oszillatoren 3, 4 alternierend abgefragt werden. Der Multiplexer 5 wird von einem Mikroprozessor 10 angesteuert, so daß alternierend die beiden empfangenen Signale der Spulenpaare 1-1', 2-2' in einem nachgeschalteten Verstärker 6 (Impedanzwandler) verstärkt werden. Dabei entspricht das verstärkte Signal einem Spannungswert, dessen Amplitude durch das gefundene Metall im Vergleich zur freischwingenden Amplitude des Oszillators gedämpft ist. Bei einer bevorzugten Ausführungsform wird die Differenzspannung zwischen der Oszillatorspannung und der gedämpften empfangenen Spannung ermittelt und gespeichert.

Der Ausgang des Verstärkers 6 ist über ein Signalfilter 7 und einen Analog-Digital-Wandler 8 mit dem Mikroprozessor 10 verbunden. Weiterhin ist der Mikroprozessor 10 über einen Digital-Analog-Wandler 9 mit einem weiteren Eingang des Signalfilters 7 verbunden.

An dem Mikroprozessor 10 ist eine Anzeige 11 mit Leuchtdioden sowie eine Anzeige 12 als Flüssigkristallanzeige (LCD-Anzeige) angeschlossen. Des weiteren sind ein Leitungsdetektor 14 mit einer Antenne 14a, ein Umschalter 15 zur Tiefenmessung sowie eine Spannungsversorgung 13 mit dem Mikroprozessor 10 verbunden.

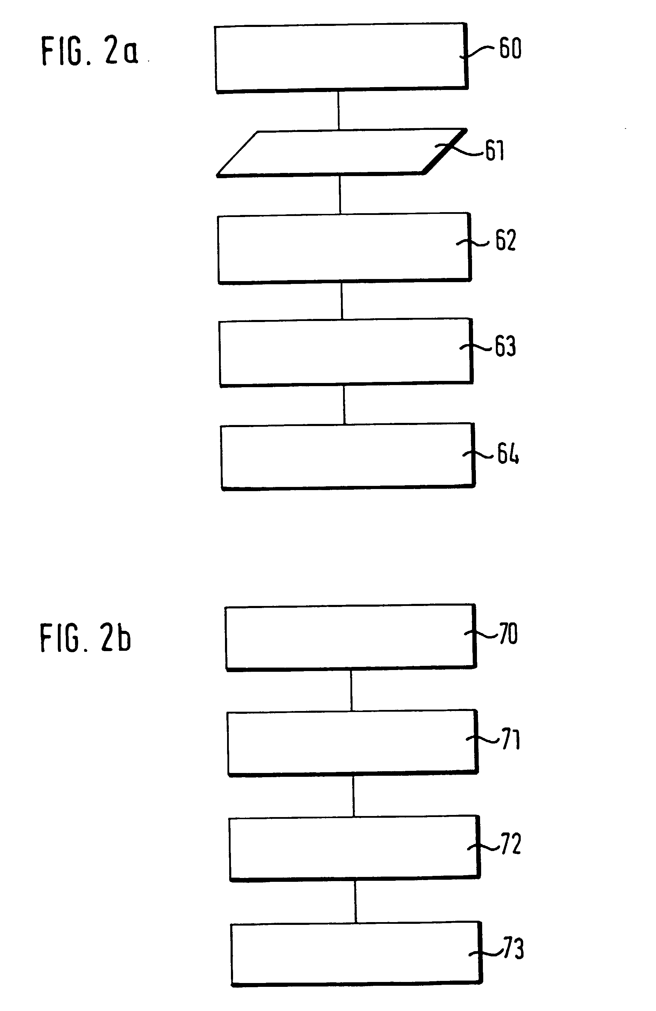

In den Figuren 2a, 2b sind Flußdiagramme für den prinzipiellen Eich- und Meßablauf dargestellt. Nach dem Einschalten des Gerätes in Position 60 wird der Metallsuchdetektor in die Luft gehalten, so daß zunächst automatisch ein Kallibriermodus ablaufen kann. Dabei wird die Amplitude der Oszillatorspannung ohne vorhandenes Metall gemessen. In Position 61 werden diese Daten in den Speicher eingelesen.

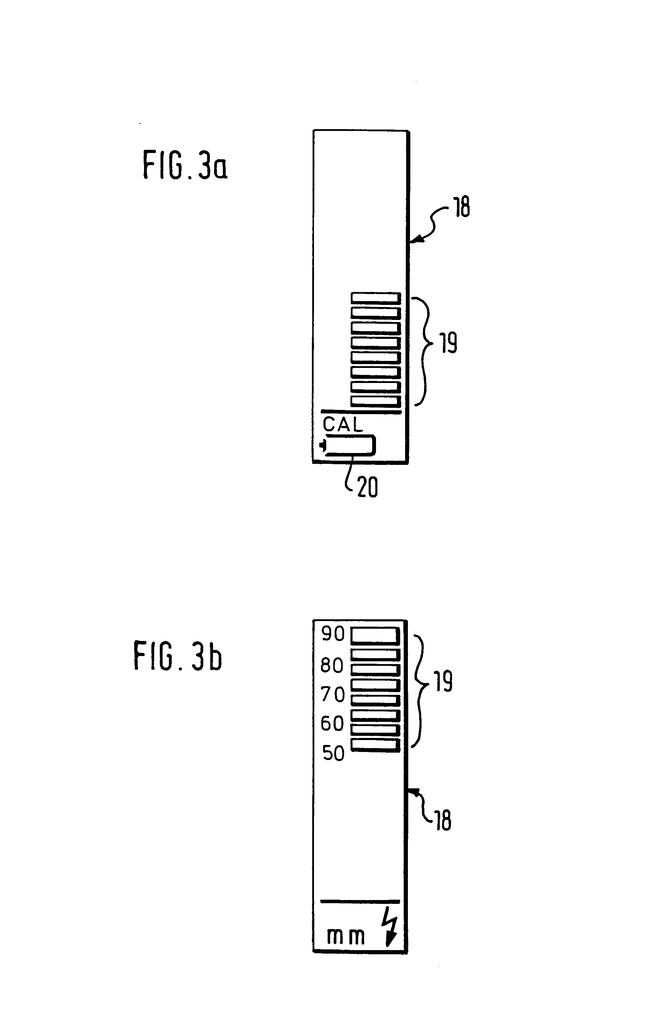

Während des Kalibriervorganges wird in einer LCD-Anzeige (Position 62) der Kalibriermodus angezeigt (Figur 3, 18). Ist der Kalibriervorgang abgeschlossen (Position 64 nach 63) dann erlischt auf der LCD-Anzeige 18 das Kalibrierzeichen. Das Gerät ist nun für die Ortung des verborgenen Metalls verwendbar, eine manuelle Eichung oder Kalibrierung ist nicht erforderlich.

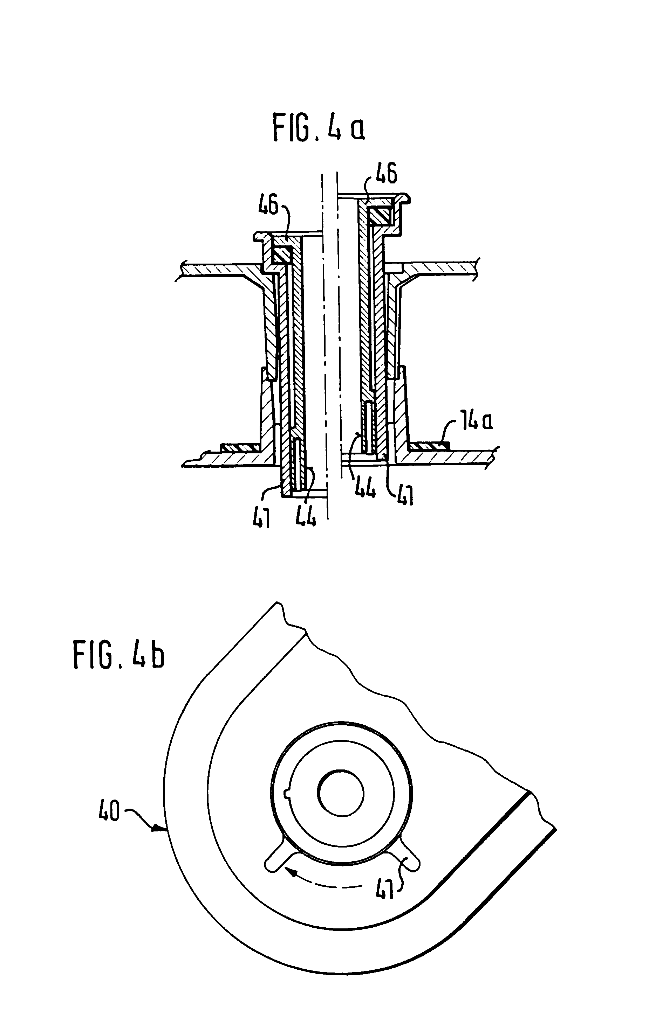

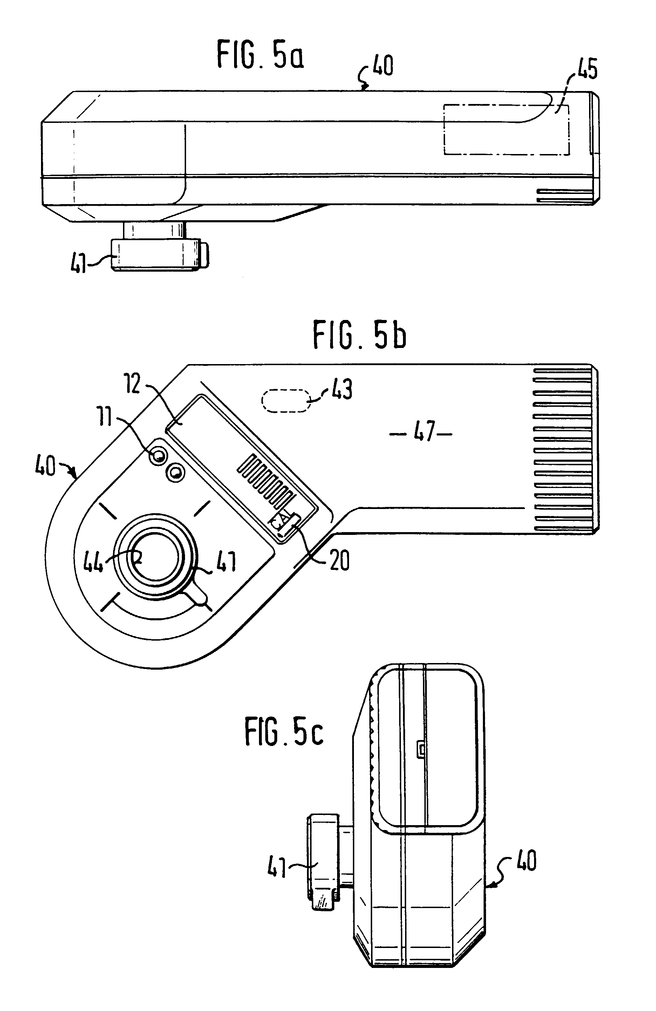

Wird nun das Metallsuchgerät mit dem Sensor S gemäß der Figuren 2, 3a, 3b über die abzusuchende Wand geführt, dann wird auf der LCD-Anzeige 18 (Figur 3a) ein Balkendiagramm 19 sichtbar, wenn Metall gefunden wird. Die Balkenlänge wird umso größer, je geringer der Abstand zum Metall ist. Wird ein Maximum erreicht, d.h. der Sensor liegt über dem verborgenen Metall, leuchtet zusätzlich eine rote Leuchtdiode 11 auf (Figur 5b). Ist dagegen das Metall weiter entfernt vom Sensor S, dann leuchtet eine grüne Leuchtdiode 11 auf. Beim Abtasten einer Wand wird der Metalldetektor solange bewegt, bis ein Maximum der LCD-Anzeige 18, 19 gefunden ist und gleichzeitig die rote Leuchtdiode 11 aufleuchtet. Gemäß dem Flußdiagramm der Figur 2b ist dieses die Ausgangsposition des Metallsuchdetektors für die Tiefenmessung des Metalls. In Position 70 der Figur 2b wird angenommen, daß der Metallsuchdetektor nunmehr über dem verborgenen Metall steht. Zur Einschaltung der Tiefenmessung wird nunmehr eine Vorrichtung 41 gemäß der Figuren 4a, 4b, 5a bis 5c derart um 90° geschwenkt, daß die Hebevorrichtung 41 den Sensor von der Wand abdrückt, und der Abstand zwischen dem Metallsuchdetektor (Gehäuse 40) und der Wand um einen vorgegebenen Betrag vergrößert wird. Im linken Teil der Figur 4a ist die Hebevorrichtung 41 nach unten ausgefahren, während sie im rechten Teil der Figur eingefahren und in Ruhestellung dargestellt ist. Das Ausfahren der Hebevorrichtung erfolgt über ein nicht dargestelltes Gewinde mit relativ großer Steigung, so daß sich nach einerDrehung um 90° der Abstand zur Wand beispielsweise um 7,5 mm vergrößert. Gleich- zeitig wird mit der Drehung der Hebevorrichtung 41 die Tiefenmessung gemäß Position 71 eingeschaltet. In Position 72 wird nun die Amplitude erneut gemessen. Aufgrund der Messungen aus zwei verschiedenen Abständen kann der Mikroprozessor die Tiefe des verborgenen Metalls nach physikalischen Gesetzen berechnen. Zur Verbesserung des Ergebnisses werden zusätzlich aus einer empirisch ermittelten Tabelle Korrekturfaktoren berücksichtigt. Da die Änderung der Meßspannung nicht nur von der Abstandsänderung, sondern auch vom Durchmesser bzw. der Masse des verborgenen Metalls abhängt, ist vorgesehen, empirisch ermittelte Werte für die Tiefe des verborgenen Metalls in einer Vergleichstabelle abzuspeichern. Das Ergebnis der Auswertung wird auf der LCD-Anzeige 18 mit dem Balken 19 angezeigt. Gleichzeitig erscheint bei der Tiefenmessung eine Skalierung in Millimeter, so daß aus der Begrenzung des Balkens die Tiefe des verborgenen Metalls abgelesen werden kann. Im dargestellten Beispiel der Figur 3b ist das Metall 50 mm tief verborgen. Die gewählte Skalierung ist relativ grob unterteilt, so daß eine größere Auflösung der Skala möglich ist.

Wird gleichzeitig mittels des Leitungsdetektors 14 eine elektrische Leitung signalisiert, dann wird auf der LCD-Anzeige 18 ein zusätzliches Warnsymbol, beispielsweise in Form eines Blitzes dargestellt. Da die elektrische Leitung ein besonderes Gefahrenpotential darstellt, ist die Warnanzeige vorrangig geschaltet, damit aus Sicherheitsgründen beim späteren nachfolgenden Bohren keine Gefahren auftreten können (Figur 3b). Die Tiefenmessung ist für diesen Fall abgeschaltet.

In Figur 5a bis c ist der Metallsuchdetektor in Aufsicht, Seitenansicht und Frontansicht dargestellt. Das Gehäuse 40 weist in zentraler Lage eine Bohrung 44 auf, um die herum die Hebevorrichtung 41 angeordnet ist. Intern im Gerät ist um die Bohrung herum der Sensor S mit den Spulenpaaren 1-1' und 2-2' angeordnet. An das Gehäuse 40 schließt sich ein um etwa 45° abgewinkelter Handgriff 47 an, der am hinteren Ende ein Batteriefach 45 als Spannungsversorgung 13 hat. Auf dem abgewinkelten Handgriff 47 ist auf der Unterseite ein Drucktaster 43 angeordnet, durch den gleichzeitig der Kallibriervorgang nach dem Einschalten des Metallsuchgerätes aktiviert wird. Im Knickbereich zwischen dem Handgriff 47 und dem Gehäuse 40 ist die LCD-Anzeige 12 sowie die rote und grüne LED 11 angeordnet. Des weiteren ist an der Bohrung 44 gemäß der Figur 4a, 4b eine Markiervorrichtung 46 angeordnet, die am unteren Ende der Hebevorrichtung 41 einen um die Bohrung 44 konzentrisch angeordneten Filzring aufweist, der mit einer nicht eintrocknenden, abwaschbaren Markierungstinte getränkt ist. Die Markiervorrichtung 46 ist von oben mit der Hand betätigbar und hinterläßt einen Abdruck auf der Wandoberfläche gerade in dem Bereich, in dem das verborgene Metall gefunden wurde.

Innerhalb des Gehäuses ist konzentrisch zu der Bohrung 44 eine ringförmige Elektrode angeordnet, die in Verbindung mit dem Leitungsdetektor 14 steht und die als Antenne 14a zur Erkennung eines elektrischen Feldes einer spannungsführenden Leitung wirkt. Durch die ringförmige Anordnung um die Bohrung 44 kann die Position der elektrischen Leitung sehr genau fixiert werden. Die ringförmige Elektrode ist entweder aus Metall oder einem elektrisch leitenden Farbauftrag ausgebildet.

Im folgenden wird die Wirkungsweise dieser Schaltung beschrieben. Zur Schwingungserzeugung enthält der Oszillator 3, 4 einen Parallelkondensator mit geringem Verlustfaktor. Der mit den Spulenpaaren 1-1' bzw. 2-2' gebildete Schwingkreis wird von einem Treiber mit Komparator und Speicher zur Formung der Oszillatorfrequenzen gebildet. Jeder der beiden Kanäle weist zur Demodulation des empfangenen Signals eine Diode und ein Kondensator-Widerstandsnetzwerk auf, mit dem aus der Oszillatorspannung eine äquivalente Gleichspannung abgeleitet wird. Diese Gleichspannungen der beiden Kanäle werden unter Kontrolle des Mikroprozessors 10 über den Multiplexer 5, Verstärker 6 und das Signalfilter auf den Analog-Digital-Wandler 8 geführt. Als Analog-Digital-Wandler wird ein 12 Bit-Wandler verwendet. Entsprechend der digitalisierten Spannung sendet der Mikroprozessor 10 über den Digital-Analog-Wandler 9 eine Offsetspannung an den Komparator des Signalfilters 7. Die Offsetspannung bewirkt, daß die ermittelten Gleichspannungswerte stets in dem Meßbereich verarbeitbar sind, der für den Digital-Analog-Wandler 8 geeignet ist.

Die beiden Gleichspannungen der Spulenpaare 1-1' und 2-2' werden durch Mittelwertbildung zu einem Spannungswert zusammengefaßt. Bei der Mittelwertsbildung wird allerdings eine Wichtung der beiden Spannungswerte vorgenommen. Dabei wird das kleinere Signal mit einem Faktor 0<k<1 multipliziert, so daß das größere Signal stärker gewichtet wird als das kleinere Signal. Es hat sich herausgestellt, daß für k=0,3 eine günstige Wichtung der Spannungssignale vorliegt. Von dem gewichteten und nicht gewichteten Signal wird der Mittelwert gebildet, der ein Maß dafür ist, ob sich ein Metall in der Nähe befindet. Dieser gewichtete Mittelwert wird auf der LCD-Anzeige als Quasi-Analog-Wert in Form eines Balkens angezeigt. Anstelle des gewichteten Mittelwertes ist auch die Differenz zwischen dem gewichteten Signal und dem nicht gewichteten Signal als Indikator für das Vorhandensein von Metall verwendbar.

Im folgenden wird die Tiefenmessung beschrieben. Das Prinzip der Tiefenmessung beruht darauf, daß zwei Messungen durchgeführt werden, wobei der Metallsuchdetektor für die zweite Messung in einem vorgegebenen Abstand von der Oberfläche der abzusuchenden Wand angehoben wird. Durch die Signaländerung, die sich - ohne seitliche Bewegung des Metallsuchgerätes - bei Änderung des Abstandes ergibt, ist ein Bezugswert erhältlich, mit dem die Tiefe des verborgenen Metalls ermittelt werden kann.

Die Oszillatoren 3 und 4 schwingen kontinuierlich mit vorgegebenen Frequenzen, beispielsweise mit 60 KHz und mit 80 KHz. Durch die unterschiedlichen Frequenzen wird eine gegenseitige Beeinflussung der beiden Oszillatorsignale vermieden. Durch das kontinuierliche Schwingen der Oszillatoren 3, 4 entfallen die Ein- und Ausschalt-Schaltzeiten für die Schwingkreise in vorteilhafter Weise. Andererseits sind durch die verschiedenen Frequenzen die Schwingsignale dennoch leicht unterscheidbar. Durch die kontinuierlichen Schwingungen ergeben sich weniger Stabilitätsprobleme, so daß die Messung insgesamt genauer wird.

Für die Tiefenmessung wird zunächst eine erste Messung durchgeführt, in der bei versenkter Hebevorrichtung 41 das verborgene Metall solange aufgesucht wird, bis die Stelle gefunden wird, bei der die maximale Signalanzeige erkennbar ist (LCD-Anzeige oder LED-Anzeige). Unter dieser Stelle liegt nun das verborgene Metall. Nach dem zuvor beschriebenen Meßverfahren wird dabei die erste Messung gewichtet. Anschließend wird der Hebel für die Hebevorrichtung 41 um 90° so gedreht, daß die Hebevorrichtung den Metallsuchdetektor um den vorgegebenen Wert, beispielsweise um 7,5 mm von der Wand abhebt. Dabei ist darauf zu achten, daß der Metallsuchdetektor auf der Wand nicht seitlich verschoben wird. Nach dem Anheben der Hebevorrichtung wird automatisch ein Schaltkontakt geschlossen, mit dem eine zweite Messung ausgelöst wird. Der Mikrocomputer 10 vergleicht nun beide Messungen und errechnet aufgrund des Abstandes von 7,5 mm und der Änderung der gewichteten Meßwerte beispielsweise nach aus der Physik bekannten Formeln die Tiefe des verborgenen Metalls und zeigt diesen Meßwert auf der LCD-Anzeige 18 in der Balkenreihe 19 an, wobei gleichzeitig eine Millimeterskalierung auf der LCD-Anzeige 18 erscheint. Für die Ermittlung der Tiefe kann natürlich auch eine empirisch ermittelte Tabelle verwendet werden, was in der Regel einfacher ist, da mit Hilfe der gespeicherten Daten Nichtlinearitäten auf einfache Weise ausgeglichen werden können.

Es hat sich als vorteilhaft herausgestellt, die Betriebsspannung nach einer vorgegebenen Zeitspanne automatisch abzuschalten, so daß dadurch die Lebensdauer der Batterie verlängert wird.

Nachdem die Tiefenmessung durchgeführt ist, kann mit der Markiervorrichtung 46 die Meßstelle mittels eines Kreises oder einer ähnlichen Markierung gekennzeichnet werden. Dazu wird auf den Knopf der Markiervorrichtung gedrückt, so daß ein Stempel ausgefahren wird, der die Markierung auf die Oberfläche der Wand aufträgt. Die markierte Stelle kann dann anschließend sehr leicht gefunden werden.

Nach der Tiefenmessung wird die Hebevorrichtung 41 wieder in die Grundstellung zurückgedreht, so daß das Metallsuchgerät für eine neue Messung verfügbar ist.

Durch die zentrale Bohrung 44 im Sensor S ist die Meßstelle direkt einsehbar, so daß möglicherweise sich auf der Oberfläche der Wand befindliche Metallteile wie Nägelköpfe oder dgl. leicht erkannt werden und nicht zu unerwünschten Meßergebnissen führen.

## Patentansprüche

1. Metallsuchdetektor zum Aufspüren von Metall, das in einem nicht metallischen Körper verborgen ist, mit wenigstens einem Sensor, der zwei kreuzweise angeordnete Spulenpaare aufweist, durch die ein Wechselstrom zur Erzeugung eines Magnetfeldes fließt, das in Richtung des verborgenenen Metalls weist und von diesem beeinflußbar ist, und mit einer Auswerteschaltung, die ausgebildet ist, die Änderung des Magnetfeldes zu erfassen und auf einer Anzeige darzustellen, wobei jeweils ein Spulenpaar (1-1', 2-2') des Sensors (S) mit einem Oszillator (3, 4) verbunden ist und die zwei Oszillatoren (3, 4) mit unterschiedlichen Frequenzen kontinuierlich schwingen, dadurch gekennzeichnet,
a) daß die Auswerteschaltung (50) die von den zwei Spulenpaaren (1-1', 2-2') empfangenen Signale nach ihrer Größe prüft und für dasjenige empfangene Signal, das die kleinere Amplitude aufweist, eine Wichtung mit einem Faktor 0<k<1 durchführt,
b) daß die Auswerteschaltung (50) das gewichtete und das nicht gewichtete Signal zusammenfaßt und
c) daß die Auswerteschaltung (50) das zusammengefaßte Signal als Indikator für das Auffinden von Metall auf der Anzeige (18) ausgibt.

2. Metallsuchdetektor nach Anspruch 1,
dadurch gekennzeichnet, daß die Auswerteschaltung (50) wenigstens einen der folgenden Schaltungsteile aufweist: einen Multiplexer (5), einen Verstärker (6), ein Signalfilter (7), einen Analog-Digital-Wandler (8) und/oder einen Mikrocomputer (10).

3. Metallsuchdetektor nach einem der vorhergehenden Ansprüche, dadurch gekennzeichnet, daß ein Leitungsdetektor (14) zur Erkennung einer spannungsführenden Leitung vorgesehen ist, der ringförmig um das Zentrum des Sensors (S) angeordnet ist.

4. Metallsuchdetektor nach einem der vorhergehenden Ansprüche, dadurch gekennzeichnet, daß die Auswerteschaltung (50) ausgebildet ist, die Tiefe des verborgenen Metalls in wenigstens folgenden Schritten zu ermitteln:
a) in einer ersten Messung wird das verborgene Metall geortet und ein erster Meßwert gespeichert,
b) nach Änderung des Abstandes des Sensors (5) oder Metallsuchdetektors zum verborgenen Metall um einen vorgegebenen Wert wird eine weitere Messung durchgeführt und ein zweiter Meßwert gespeichert,
c) Ermittlung der Differenz zwischen den beiden Meßwerten,
e) Ermittlung der Tiefe des verborgenen Metalls aus der Differenz der beiden Meßwerten und der Abstandsänderung nach einem vorgegebenen Algorithmus.

5. Metallsuchdetektor nach Anspruch 4, dadurch gekennzeichnet, daß die Werte für die Tiefenermittlung des verborgenen Metalls in einem Speicher der Auswerteschaltung (50) abgelegt sind.

6. Metallsuchdetektor nach einem der Ansprüche 4 oder 5, dadurch gekennzeichnet, daß Korrekturfaktoren für das Meßsignal beeinflussende Parameter in einem Speicher abgelegt sind.

7. Metallsuchdetektor nach einem der Ansprüche 4bis 6, dadurch gekennzeichnet, daß die Korrekturfaktoren zur Korrektur der Meßsignale verwendbar sind.

8. Metallsuchdetektor nach einem der vorhergehenden Ansprüche, dadurch gekennzeichnet, daß der wenigstens eine Sensor (S, 14a) in einem Gehäuse (40) angeordnet ist, das einen Handgriff (47) aufweist.

9. Metallsuchdetektor nach Anspruch 8, dadurch gekennzeichnet, daß der Handgriff (47) zum Gehäuse (40) seitlich abgewinkelt ist.

10. Metallsuchdetektor nach einem der Ansprüche 8 oder 9, dadurch gekennzeichnet, daß im Gehäuse (40) im Wirkzentrum des wenigstens einen Sensors (S) eine Bohrung (44) angeordnet ist.

11. Metallsuchdetektor nach einem der Ansprüche 8 bis 10, dadurch gekennzeichnet, daß das Gehäuse (40) im Bereich des Sensors (S) eines Hebevorrichtung zur definierten Änderung des Meßabstandes zum Meßobjekt aufweist.

12. Metallsuchdetektor nach einem der Anspruch 10, dadurch gekennzeichnet, daß das Gehäuse (40) im Bereich der Bohrung (44) eine Markiervorrichtung (46) aufweist.

13. Metallsuchdetektor nach einem der Ansprüche 8-12, dadurch gekennzeichnet, daß das Gehäuse (40) eine LCD-Anzeige (12) mit mehreren Meßbereichen (16 bis 20) aufweist.

14. Metallsuchdetektor nach Anspruch 13, dadurch gekennzeichnet, daß die LCD-Anzeige (12) während der Ortung des Metalls ein dem Abstand zum Metall proportionales Signal anzeigt.

15. Metallsuchdetektor nach Anspruch 13 oder 14, dadurch gekennzeichnet, daß das Tiefenmeßergebnis auf einer normierten Skala (19) der LCD-Anzeige (18) ausgebbar ist.

16. Metallsuchdetektor nach einem der vorhergehenden Ansprüche, dadurch gekennzeichnet, daß ein Leitungsdetektor (14) vorgesehen ist, der bei Erkennung einer elektrischen Leitung ein akustisches Warnsignal und/oder eine Warnanzeige abgibt.

17. Metallsuchdetektor nach Anspruch 16, dadurch gekennzeichnet, daß das Warnsignal und/oder die Warnanzeige vorrangig vor der Tiefenmessung des Metalls ausgebbar ist.

## Claims

1. Metal detector for detecting metal which is concealed in a non-metallic body, having at least one sensor which has two coil pairs which are arranged in the form of a cross and through which an alternating current flows in order to produce a magnetic field which points in the direction of the concealed metal and can be influenced by said metal, and having an evaluation circuit which is designed to detect the change in the magnetic field and to present it on a display, one coil pair (1-1', 2-2') of the sensor (S) in each case being connected to an oscillator (3, 4), and the two oscillators (3, 4) oscillating continuously at different frequencies, characterized
a) in that the evaluation circuit (50) checks the magnitude of the signals received by the two coil pairs (1-1', 2-2') and carries out a weighting with a factor 0 < k < 1 for that received signal which has the smaller amplitude,
b) in that the evaluation circuit (50) combines the weighted signal and the non-weighted signal and
c) in that the evaluation circuit (50) emits the combined signal on the display (18), as an indicator for finding metal.

2. Metal detector according to Claim 1, characterized in that the evaluation circuit (50) has at least one of the following circuit paths: a multiplexer (5), an amplifier (6), a signal filter (7), an analog/digital converter (8) and/or a microcomputer (10).

3. Metal detector according to one of the preceding claims, characterized in that a cable detector (14) is provided in order to identify a live cable, which cable detector (14) is arranged in the form of a ring around the centre of the sensor (S).

4. Metal detector according to one of the preceding claims, characterized in that the evaluation circuit (50) is designed to determine the depth of the concealed metal in at least the following steps:
a) the concealed metal is located and a first measured value is stored in a first measurement,
b) a further measurement is carried out and a second measured value is stored after changing the distance between the sensor (5) or the metal detector and the concealed metal by a predetermined value,
c) the difference between the two measured values is determined,
e) the depth of the concealed metal is determined from the difference between the two measured values and the distance change, in accordance with a predetermined algorithm.

5. Metal detector according to Claim 4, characterized in that the values for determining the depth of the concealed metal are stored in a memory in the evaluation circuit (50).

6. Metal detector according to one of Claims 4 or 5, characterized in that correction factors for parameters which influence the measurement signal are stored in a memory.

7. Metal detector according to one of Claims 4 to 6, characterized in that the correction factors can be used for correction of the measurement signals.

8. Metal detector according to one of the preceding claims, characterized in that the one, or more than one, sensor (S, 14a) is arranged in a housing (40) which has a handle (47).

9. Metal detector according to Claim 8, characterized in that the handle (47) is bent to the side with respect to the housing (40).

10. Metal detector according to one of Claims 8 or 9, characterized in that a hole (44) is arranged in the housing (40) at the operative centre of the one, or more than one, sensor (S).

11. Metal detector according to one of Claims 8 to 10, characterized in that the housing (40) has a lifting device, in order to change the measurement distance from the measurement object in a defined manner in the region of the sensor (S).

12. Metal detector according to Claim 10, characterized in that the housing (40) has a marking device (46) in the region of the hole (44).

13. Metal detector according to one of Claims 8-12, characterized in that the housing (40) has an LCD display (12) with a plurality of measurement ranges (16 to 20).

14. Metal detector according to Claim 13, characterized in that the LCD display (12) displays a signal, which is proportional to the distance from the metal, during the location of the metal.

15. Metal detector according to Claim 13 or 14, characterized in that the depth measurement result can be output on a normalized scale (19) on the LCD display (18).

16. Metal detector according to one of the preceding claims, characterized in that a cable detector (14) is provided which emits an audible warning signal and/or outputs a warning display on identification of an electrical cable.

17. Metal detector according to Claim 16, characterized in that the warning signal and/or the warning display can be emitted or output with priority over the depth measurement of the metal.

## Revendications

1. Détecteur de métaux pour rechercher un métal caché dans un corps non métallique, comprenant au moins un capteur à deux paires de bobines disposées en croix, traversées par un courant alternatif générant un champ magnétique dirigé vers le métal caché et influencées par celui-ci, ainsi qu'un circuit d'exploitation pour détecter la variation du champ magnétique et l'afficher sur un moyen d'affichage, une paire de bobines (1-1', 2-2') du capteur (S) étant reliée chaque fois à un oscillateur (3, 4) et les deux oscillateurs (3, 4) oscillent en continu à des fréquences différentes,
caractérisé en ce que
a) le circuit d'exploitation (50) contrôle l'amplitude des signaux reçus par les deux paires de bobines (1-1', 2-2') et, pour le signal reçu ayant la plus petite amplitude, effectue une pondération avec un coefficient k tel que 0<k<1,
b) le circuit d'exploitation (50) réunit le signal pondéré et le signal non pondéré,
c) le circuit d'exploitation émet le signal combiné comme indicateur de la recherche réussie du métal sur l'affichage (18).

2. Détecteur de métaux selon la revendication 1,
caractérisé en ce que
le circuit d'exploitation (50) comporte au moins l'une des parties de circuit suivantes :
un multiplexeur (5), un amplificateur (6), un filtre de signal (7), un convertisseur analogique/numérique (8) et/ou un micro-ordinateur (10).

3. Détecteur de métaux selon l'une des revendications précédentes,
caractérisé par
un détecteur de ligne (14) pour reconnaître une ligne sous tension, ce détecteur entourant de manière annulaire le centre du capteur (S).

4. Détecteur de métaux selon l'une des revendications précédentes,
caractérisé en ce que
le circuit d'exploitation (50) est réalisé pour déterminer la profondeur du métal caché selon au moins les étapes suivantes :
a) au cours d'une première mesure on localise le métal caché et on met en mémoire une première valeur de mesure,
b) après variation de l'écartement du capteur (5) ou du détecteur de métaux, d'une distance prédéterminée par rapport au métal caché, on effectue une seconde mesure et on met en mémoire une seconde valeur de mesure,
c) on détermine la différence entre les deux valeurs de mesure,
e) on détermine la profondeur du métal caché à partir de la différence des deux valeurs de mesure et de la variation de distance, selon un algorithme prédéterminé.

5. Détecteur de métaux selon la revendication 4,
caractérisé en ce que
des valeurs pour déterminer la profondeur du métal caché sont enregistrées dans une mémoire du circuit d'exploitation (50).

6. Détecteur de métaux selon l'une des revendications 4 ou 5,
caractérisé en ce que
des coefficients de correction pour le paramètre influençant le signal de mesure sont enregistrés dans une mémoire.

7. Détecteur de métaux selon l'une des revendications 4 à 6,
caractérisé en ce que
les coefficients de correction sont utilisables pour corriger les signaux de mesure.

8. Détecteur de métaux selon l'une des revendications précédentes,
caractérisé en ce qu'
au moins un capteur (S, 14a) est logé dans un boîtier (40) muni d'une poignée (47).

9. Détecteur de métaux selon la revendication 8,
caractérisé en ce que
la poignée (47) est coudée latéralement par rapport au boîtier (40).

10. Détecteur de métaux selon l'une des revendications 8 ou 9,
caractérisé par
au moins un perçage (44) prévu dans le boîtier (40), dans le centre actif d'au moins un capteur (S).

11. Détecteur de métaux selon l'une des revendications 8 à 10,
caractérisé en ce que
le boîtier (40) comporte, au niveau du capteur (S), un dispositif de levage pour modifier de manière définie la distance de mesure par rapport à l'objet à mesurer.

12. Détecteur de métaux selon la revendication 10,
caractérisé en ce que
le boîtier (40) comporte un dispositif de marquage (46) au niveau du perçage (44).

13. Détecteur de métaux selon l'une des revendications 8 à 12,
caractérisé en ce que
le boîtier (40) comporte un affichage LCD (12) à plusieurs zones de mesure (16-20).

14. Détecteur de métaux selon la revendication 13,
caractérisé en ce que
l'affichage LCD (12) indique, pendant la localisation du métal, un signal proportionnel à la distance par rapport au métal.

15. Détecteur de métaux selon la revendication 13 ou 14,
caractérisé en ce que
le résultat de la mesure de profondeur est affiché sur une échelle normalisée (19) de l'affichage LCD (18).

16. Détecteur de métaux selon l'une des revendications précédentes,
caractérisé par
un détecteur de ligne (14) qui, en reconnaissant une ligne électrique, émet un signal avertisseur acoustique et/ou un affichage avertisseur.

17. Détecteur de métaux selon la revendication 16,
caractérisé en ce que
le signal avertisseur et/ou l'affichage avertisseur sont émis de manière prioritaire par rapport à la mesure de profondeur du métal.
